# EUROPEAN PATENT APPLICATION

(11) **EP 2 894 695 A2**
(43) Date of publication of application: **15.07.2015**
(21) Application number: 14191674.2
(22) Date of filing: 04.11.2014
(51) Int. Cl.: H01M 2/20, H01M 2/10, H01M 2/30, H01M 10/48

(54) **A battery cell connecting board**

(30) Priority: 05.11.2013 KR 20130133682; 16.05.2014 KR 20140059209
(71) Applicant: Tyco Electronics Amp Korea Ltd., Kyungsan-si, Kyungsangbuk-do 712-838 (KR)
(72) Inventor: Lee, Sung Hwa, 712-838 Kyungsangbuk-do (KR)
(74) Representative: Johnstone, Douglas Ian

(57) **Abstract**

A battery cell connecting board (100) is provided which includes a bus bar (180) and a housing (110). The housing (110) comprises a bus bar mounting surface (120) on which the bus bar (180) is mounted, a circuit board mounting surface on which a circuit board electrically connected to the bus bar (180) is mounted, and a connector facing surface (130) from which a connector connecting portion (131) protrudes. The connector connecting portion (131) accommodates a terminal connected to the circuit board. The connector connecting portion (131) and the connector facing surface (130) are integrally formed.

## Description

### Technical Field

The present invention relates to a battery cell connecting board.

### Related Art

A battery relates to a mechanism configured to convert chemical energy to electrical energy. Currently, a battery package including a plurality of battery cells is being used. A battery cell connecting board is required to electrically connect the plurality of battery cells.

Korean Patent Laid-Open Publication No. 10-2002-0077175 discloses a battery pack 1 including: a battery cases 7 including a generating element; a cover 9 configured to partition a part receiving space in a space formed with the battery case 7 by covering one side of the battery case 7; a circuit device 61 disposed within the part receiving space and connected to the generating element; and terminals 13 and 23 disposed within the part receiving space and connected to an external circuit through the cover 9 at the same time of a connection to the generating element. Here, the cover 9, the circuit device 61, and the terminals 13 and 23 may be commonly referred to as a "battery cell connecting board".

In the case of a battery cell connecting board according to a related art, individual electronic parts need to be connected through a manual operation using a lead 63. Also, there is a relatively high manufacturing cost, and a relatively large amount of time is used for the manufacturing process due to the large number of parts. In addition, a fault may occur due to the entrance of water or other foreign substances.

### Description of the Invention

### Subjects

The present invention provides a battery cell connecting board that may reduce manufacturing cost and an amount of time used for a manufacturing process, and may achieve an excellent stability.

### Solutions

According to an aspect of the present invention, there is provided a battery cell connecting board including: a bus bar; and a housing including a bus bar mounting surface on which the bus bar is mounted, a circuit board mounting surface on which a circuit board electrically connected to the bus bar is mounted, and a connector facing surface from which a connector connecting portion for accommodating a terminal provided to the circuit board is protruded. The connector connecting portion and the connector facing surface may be integrally formed.

The circuit board mounting surface may be provided on a surface opposite to the connector facing face or surface, and the battery cell connecting board may further include a synthetic resin applied to at least one of the circuit board mounting surface and the connector facing face.

The housing may further include a resin hole formed to pass through the connector facing surface and the circuit board mounting face or surface. The synthetic resin is applied to one of the circuit board mounting surface and the connector facing surface and applied to another of the circuit board mounting surface and the connector facing surface through the resin hole.

One end of the terminal may be positioned to be lower than a height of the protruded connector connecting portion, and another end of the terminal may be positioned within a synthetic resin layer formed by applying the synthetic resin.

A wall protruded along the periphery of a corresponding surface to prevent a leakage of the synthetic resin may be formed on at least one of the circuit board mounting surface and the connector facing face.

The terminal may be inserted into a terminal inserting hole formed to pass through the circuit board mounting surface and the connector facing face.

The battery cell connecting board may further include a sealing member disposed between the circuit board and the circuit board mounting surface to seal a space between the terminal inserting hole and the terminal.

The bus bar may include: a bus bar body configured to be mounted on the bus bar mounting face; a cell lead connecting portion extended from one side of the bus bar body to be connected to a cell lead of an external battery; and a board connecting portion extended from another side of the bus bar body to be connected to the circuit board. The board connecting portion may be connected to the circuit board through a board connecting portion inserting hole formed to pass through the connector facing surface and the circuit board mounting face, and the synthetic resin may be applied in a state in which the board connecting portion, the sealing member, and the circuit board are mounted on the circuit board mounting face.

The battery cell connecting board may further include a sealing member disposed between the circuit board and the circuit board mounting face.

The bus bar may include: a bus bar body configured to be mounted on the bus bar mounting face; a cell lead connecting portion extended from one side of the bus bar body to be connected to a cell lead of an external battery; and a board connecting portion extended from another side of the bus bar body to be connected to the circuit board.

A location guide portion configured to guide a mounting location of the circuit board and a fixing portion configured to fix the circuit board may be formed on the circuit board mounting face. A location guide hole corresponding to the location guide portion and a fixing hole corresponding to the fixing portion may be formed on the circuit board.

At least a portion of a wall of the circuit board may match a shape of a wall protruded along the periphery of the circuit board mounting face.

The bus bar may include: a bus bar body configured to be mounted on the bus bar mounting face; a first curved portion and a second curved portion extended from both sides of the bus bar body, respectively, and inserted into cell lead inserting holes formed on the bus bar mounting face, respectively, to prevent a horizontal movement of the bus bar; a third curved portion extended from the bus bar body in a direction different from directions in which the first curved portion and the second curved portion are extended, and inserted into a curved portion inserting hole formed on the bus bar mounting surface to prevent a forward and backward movement of the bus bar; and a board connecting portion extended from the bus bar body in a direction opposite to the direction of the third curved portion and connected to the circuit board.

The bus bar may further include a stopper formed by cutting and then curving one side of the bus bar body and fixably inserted into a stoppage hole formed on the bus bar mounting face or surface.

According to another aspect of the present invention, there is provided a method of manufacturing a battery cell connecting board comprising the steps of: providing the battery cell connecting board with a housing comprising: a bus bar mounting surface, a connector facing surface, a circuit board mounting surface, and a terminal in a terminal inserting hole which passes through the circuit board mounting surface and the connector facing surface; sealing a space between the terminal inserting hole and the terminal with a sealing member; mounting a circuit board on the circuit board mounting surface wherein the sealing member is disposed between the circuit board and the circuit board mounting surface; mounting a bus bar on the bus bar mounting surface and electrically connecting the circuit board to the bus bar with a board connecting portion of the bus bar; and applying a synthetic resin to at least one of the circuit board mounting surface and the connector facing face in a state in which the board connecting portion, the sealing member, and the circuit board are mounted on the circuit board mounting surface.

### Effects

According to embodiments of the present invention, it is possible to reduce the number of parts and an amount of time used for a manufacturing process by integrally forming a connector connecting portion and a housing. Also, it is possible to effectively fix a circuit board to the housing. Also, it is possible to achieve a waterproof and dustproof structure using synthetic resin. Also, it is possible to prevent resin from filling in an undesired place during a hot-melting process.

### Detailed Description of Drawings

FIG. 1 is a perspective view illustrating an assembly process of a battery cell connecting board and a battery according to an embodiment of the present invention.
FIG. 2 is a perspective view of a battery cell connecting board according to an embodiment of the present invention.
FIG. 3 is a rear view of a battery cell connecting board according to an embodiment of the present invention.
FIG. 4 illustrates a state in which a sealing member is mounted on the battery cell connecting board of FIG. 3.
FIG. 5 illustrates a state in which a circuit board is mounted on the battery cell connecting board of FIG. 4.
FIG. 6 illustrates a state in which synthetic resin is applied to the battery cell connecting board of FIG. 5.
FIG. 7 is a top view of the battery cell connecting board of FIG. 6.
FIG. 8 is a cross-sectional view cut along a line I-I of FIG. 7.
FIG. 9 is a perspective view of a battery cell connecting board according to another embodiment of the present invention.
FIG. 10 is a perspective view of a bus bar according to another embodiment of the present invention.

### Detailed Description to Carry Out the Invention

Hereinafter, example embodiments will be described in detail with reference to the accompanying drawings. Regarding the reference numerals assigned to the elements in the drawings, it should be noted that the same elements will be designated by the same reference numerals, wherever possible, even though they are shown in different drawings. Also, in the description of embodiments, detailed description of well-known related structures or functions will be omitted when it is deemed that such description will cause ambiguous interpretation of the present disclosure.

In addition, terms such as first, second, A, B, (a), (b), and the like may be used herein to describe components of the present invention. Each of these terminologies is not used to define an essence, order, or sequence of a corresponding component, but used merely to distinguish the corresponding component from other component(s). It should be noted that if it is described in the specification that one component is "connected", "coupled", or "joined" to another component, a third component may be "connected", "coupled", and "joined" between the first and second components, although the first component may be directly connected, coupled or joined to the second component.

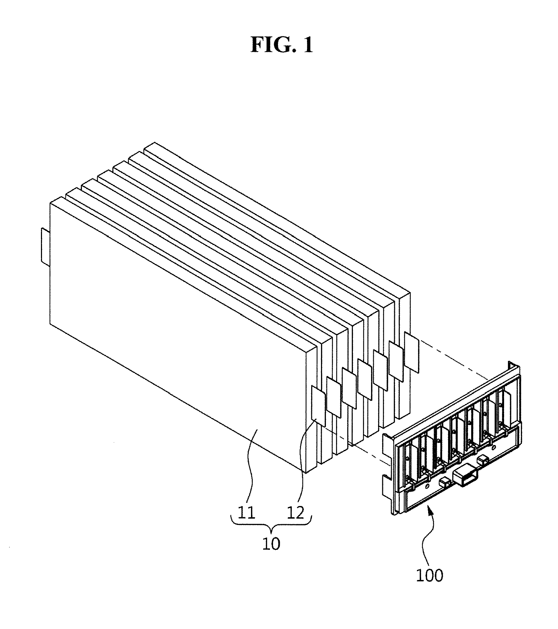

FIG. 1 is a perspective view illustrating an assembly process of a battery cell connecting board 100 and a battery 10 according to an embodiment of the present invention.

Referring to FIG. 1, the battery cell connecting board 100 may be used through a connection to one side of the battery 10.

The battery 10 may include a plurality of cell bodies 11, and each of the plurality of cell bodies 11 may include a cell lead 12 for an electrode connection.

The battery cell connecting board 100 may be detachably provided to the one side of the battery 10. The battery cell connecting board 100 may be connected to the cell lead 12 to transfer an electrical signal transferred from the battery 10 to an outside.

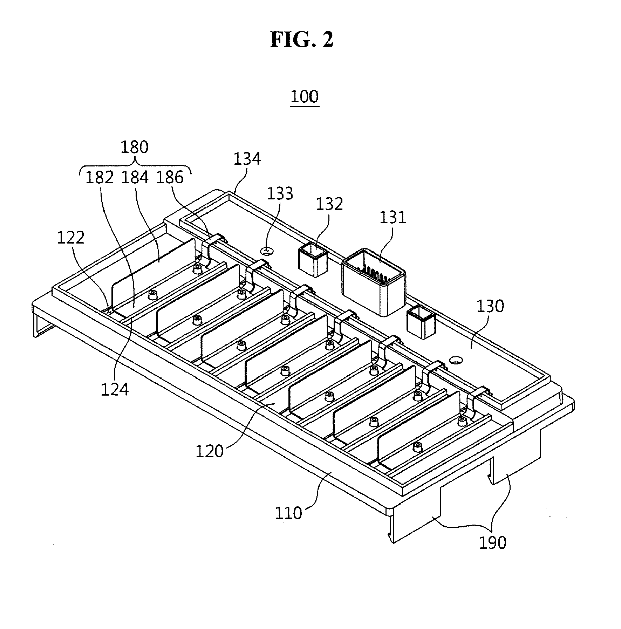

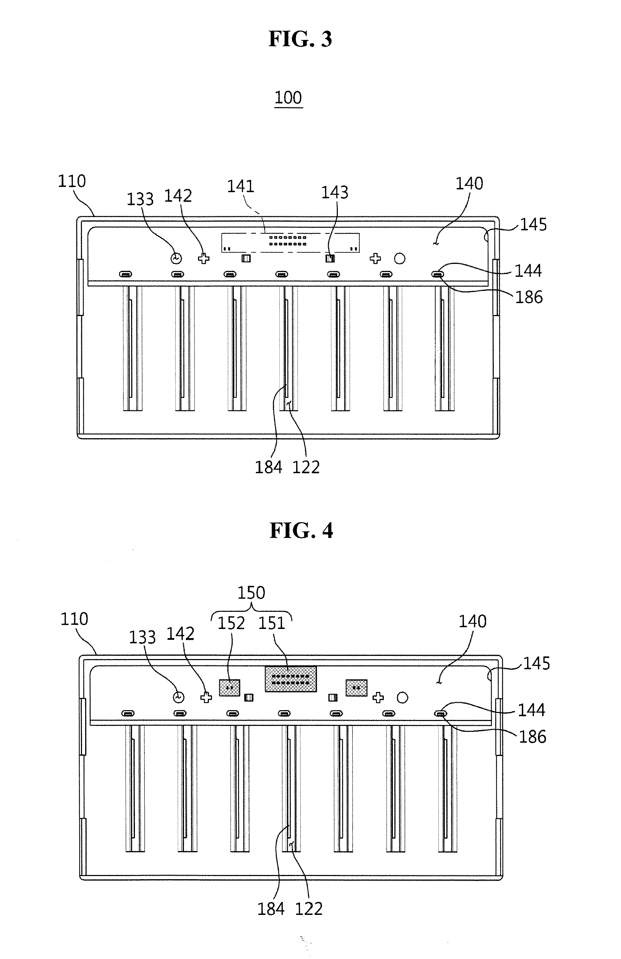

FIG. 2 is a perspective view of the battery cell connecting board 100 according to an embodiment of the present invention, and FIG. 3 is a rear view of the battery cell connecting board 100 according to an embodiment of the present invention.

Referring to FIGS. 2 and 3, the battery cell connecting board 100 may include a housing 110 configured to form an appearance and a bus bar 180 mounted to the housing 110.

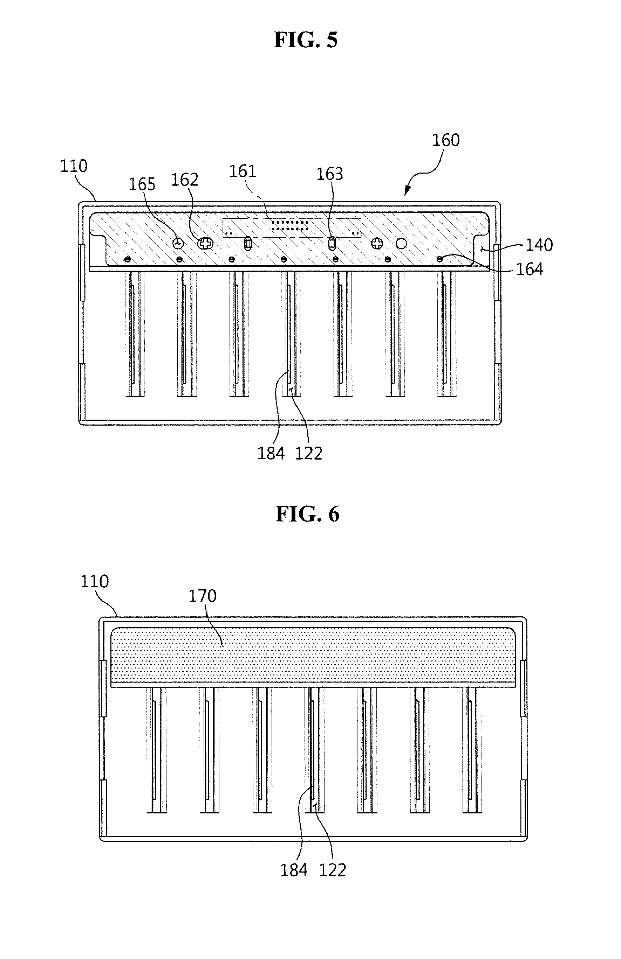

The housing 110 may include a bus bar mounting surface 120 on which the bus bar 180 is mounted, a connector facing surface 130 to which a connector electrically connected to the bus bar 180 is connected, a circuit board mounting surface 140 on which a circuit board 160 of FIG. 5 is mounted, and a battery coupling portion 190 coupled with the battery 10.

A top surface of the housing 110 may be divided into the bus bar mounting surface 120 and the connector facing surface 130.

A cell lead inserting hole 122 into which the cell lead 12 is inserted may be formed on the bus bar mounting surface 120. The bus bar 180 may be disposed on one side of the cell lead inserting hole 122.

A guide 124 for guiding a mounting location of the bus bar 180 may be formed on the bus bar mounting surface 120. The guide 124 may be formed in a lengthwise direction of the bus bar 180. The guide 124 may be protruded from the bus bar mounting surface 120 to support one side of the bus bar 180.

Connector connecting portions, for example, a first connector connecting portion 131 and a second connector connecting portion 132 connectable with at least one connector, a first resin hole 133, and a first wall 134 formed along the periphery of the connector facing surface 130 may be formed on the connector facing surface 130.

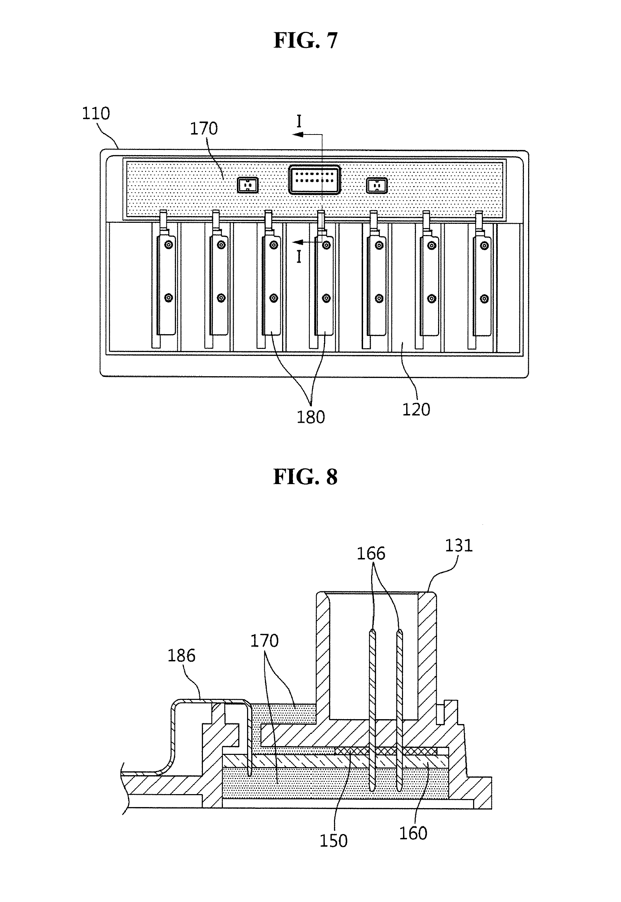

The connector connecting portions, for example, the first connector connecting portion 131 and the second connector connecting portion 132, may be integrally formed with the connector facing surface 130 thereon. Through the above structure, it is possible to achieve a waterproof and dustproof effect without using a separate sealing member between the connector connecting portions, for example, the first connector connecting portion 131 and the second connector connecting portion 132, and the connector facing surface 130. Outer walls of the connector connecting portions may be protruded from the connector facing surface 130. At least one terminal 166 of FIG. 8 may be disposed in a space specified as an inside of the outer wall.

The number of connector connecting portion may be plural. The connector connecting portions may include the first connector connecting portion 131 for connecting a first connector and the second connector connecting portion 132 for connecting a second connector. There may be second connector connecting portions 132 symmetrically disposed on the left and the right of the first connector connecting portion 131, respectively.

The first resin hole 133 may be formed in a shape that vertically passes through the connector facing surface 130.

The first wall 134 may be protruded along the periphery of the connector facing surface 130. The first and second connector connecting portions 131 and 132 and the first resin hole 133 may be provided within the first wall 134.

The circuit board mounting surface 140 may be disposed on a rear surface of the housing 110. The circuit board mounting surface 140 may be disposed to overlap the connector facing surface 130 in a vertical direction. That is, the circuit board mounting surface 140 may be disposed on a rear surface of the connector facing surface 130.

The first resin hole 133, a terminal inserting hole 141 into which the terminal 166 of FIG. 8 is inserted, a location guide portion 142 for guiding a mounting location of the circuit board 160 of FIG. 5, a fixing portion 143 for fixing the circuit board 160, a board connecting portion inserting hole 144 into which a board connecting portion 186 is inserted, and a second wall 145 formed along the periphery of the circuit board mounting surface 140 may be formed on the circuit board mounting surface 140. Here, the first resin hole 133, the terminal inserting hole 141, and the board connecting portion inserting hole 144 may be formed to pass through the connector facing surface 130 and the circuit board mounting surface 140.

The terminal inserting holes 141 may include a first terminal inserting hole formed on a portion corresponding to the first connector connecting portion 131 and a second terminal inserting hole formed on a portion corresponding to the second connector connecting portion 132.

The location guide portion 142 may be protruded from the circuit board mounting surface 140. The location guide portion 142 may be provided in a variety of shapes. For example, in FIG. 3, the location guide portion 142 has a cross-section in a shape of a cross.

The fixing portion 143 may be protruded from the circuit board mounting surface 140. The fixing portion 143 may be provided in a shape of, for example, a hook.

The bus bar 180 may include a bus bar body 182 fixed to the housing 110, a cell lead connecting portion 184 for connecting the cell lead 12, and the board connecting portion 186 connected to the circuit board 160. The bus bar body 182, the cell lead connecting portion 184, and the board connecting portion 186 may be integrally formed using a metal material having conductivity.

The bus bar body 182 may be fixed on the bus bar mounting surface 120. For example, the bus bar body 182 may be fixed on the bus bar mounting surface 120 using a coupling member such as a screw, a bolt, and a rivet. The bus bar body 182 may also be fixed on the bus bar mounting surface 120 using a hot-melting method. In detail, a hole (not shown) may be formed on the bus bar body 182 and a protrusion (not shown) corresponding to the hole may be formed on the bus bar mounting surface 120. A fixing portion may be formed on an upper side of the protrusion by heating and melting the protrusion in a state in which the protrusion is inserted into the hole and thereby coupled therewith. The fixing portion may be formed to have a diameter greater than a diameter of the hole, thereby preventing the bus bar body 182 from being detached from the bus bar mounting surface 120.

The cell lead connecting portion 184 may be extended from one side of the bus bar body 182. The cell lead connecting portion 184 may be understood to be formed by curving one end of the bus bar body 182. Referring to FIG. 3, at least a portion of the cell lead connecting portion 184 may be mounted to vertically overlap the cell lead inserting hole 122. Through the above structure, the cell lead 12 and the bus bar 180 may be firmly connected to each other. The cell lead 12 and the bus bar 180 may also be firmly fixed through welding in a state in which the cell lead 12 and the bus bar 180 are in contact with each other. For example, laser welding or ultrasonic welding may be used.

The board connecting portion 186 may be extended from another side of the bus bar body 182. The board connecting portion 186 may also be understood to be formed by curving another end of the bus bar body 182. Referring to FIG. 2, the board connecting portion 186 may be curved at least once and be arranged to hang over the first wall 134. The board connecting portion 186 may be connected to the circuit board 160 through the board connecting portion inserting hole 144.

The battery coupling portion 190 may be formed on one side of the bus bar mounting surface 120 or the connector facing surface 130. For example, the battery coupling portion 190 may be formed on each of both sides of the bus bar mounting surface 120. The battery cell connecting board 100 may be coupled with the battery 10 through the battery coupling portion 190. When the battery cell connecting board 100 is coupled with the battery 10, the cell lead 12 may be connected to the bus bar 180.

FIG. 4 illustrates a state in which a sealing member 150 is mounted on the battery cell connecting board 100 of FIG. 3.

Referring to FIG. 4, the sealing member 150 may be mounted on a rear surface of the battery cell connecting board 100.

The sealing member 150 may prevent the entrance of foreign substances from the rear surface of the housing 110 into the first and second connector connecting portions 131 and 132.

A hole for an insertion of the terminal 166 may be formed on the sealing member 150. In this case, the hole may be formed to have a diameter less than a diameter of the terminal 166 in order to sufficiently guarantee the sealing effect.

The sealing member 150 may include a first sealing member 151 mounted on a portion in which the first terminal inserting hole is formed and a second sealing member 152 mounted on a portion in which the second terminal inserting hole is formed.

Although a plurality of sealing members is illustrated as an example in FIG. 4, a single sealing member may be widely mounted on the circuit board mounting surface 140 in order to be capable of covering all the terminal inserting holes. In this case, holes may be formed on the sealing member to correspond to shapes of the location guide portion 142, the fixing portion 143, the first resin hole 133, and the board connecting portion inserting hole 144.

FIG. 5 illustrates a state in which the circuit board 160 is mounted on the battery cell connecting board 100 of FIG. 4.

Referring to FIG. 5, the circuit board 160 may be mounted on the rear surface of the battery cell connecting board 100. The circuit board 160 may be provided on the circuit board mounting surface 140.

The circuit board 160 may be placed on the sealing member 150. That is, the sealing member 150 may be disposed between the circuit board 160 and the circuit board mounting surface 140.

A terminal coupling portion 161 on which the terminal 166 is mounted, a location guide hole 162 into which the location guide portion 142 is inserted, a fixing hole 163 to which the fixing portion 143 is fixed, a board connecting portion coupling portion 164 on which the board connecting portion 186 is mounted, and a second resin hole 165 may be formed on the circuit board 160.

The terminal 166 may be coupled with the terminal coupling portion 161 using a soldering method.

The location guide hole 162 may be provided in a variety of shapes to correspond to a shape of the location guide portion 142.

The board connecting portion 186 may be coupled with the board connecting portion coupling portion 164 using a soldering method.

The second resin hole 165 may be formed at a location at which the second resin hole 165 vertically overlaps, for example, the first resin hole 133.

At least a portion of the wall of the circuit board 160 may match a shape of the second wall 145 of the circuit board mounting surface 140. For example, one corner of the circuit board 160 and an opposite corner thereof may correspond to one corner of the second wall 145 and an opposite corner thereof, respectively.

Another portion of the wall of the circuit board 160 may be provided in an inwardly recessed shape to be separate from the second wall 145.

FIG. 6 illustrates a state in which synthetic resin 170 is applied to the battery cell connecting board 100 of FIG. 5, FIG. 7 is a top view of the battery cell connecting board 100 of FIG. 6, and FIG. 8 is a cross-sectional view cut along a line I-I of FIG. 7.

Referring to FIGS. 6 through 8, in a state in which the circuit board 160 is mounted, the synthetic resin 170 may be applied on the circuit board mounting surface 140. The synthetic resin 170 may fix the circuit board 160, the sealing member 150, the board connecting portion 164 connected to the circuit board 160, and the terminal 166 by filling in an empty space on the circuit board mounting surface 140. The synthetic resin 170 may be applied only in an inside space partitioned by the second wall 145. That is, the second wall 145 may partition a space in which the synthetic resin 170 is applied.

Water tightness is maintained between the terminal 166 and the terminal inserting hole 141 by the sealing member 150, thereby preventing the synthetic resin 170 from entering the first and second connector connecting portions 131 and 132. That is, the sealing member 150 may prevent the synthetic resin 170 from entering the first and second connector connecting portions 131 and 132.

The synthetic resin 170 may be applied over the connector facing surface 130.

The synthetic resin 170 may fix the board connecting portion 186 by filling in the empty space on the connector facing surface 130. The synthetic resin 170 may be injected only into a space specified by outer walls of the first and second connector connecting portions 131 and 132 and the first edge or wall 134. That is, the outer walls of the first and second connector connecting portions 131 and 132 and the first edge 134 may partition the space into which the synthetic resin 170 is injected. Also, the outer walls of the first and second connector connecting portions 131 and 132 may prevent the synthetic resin 170 from entering an inside.

When the synthetic resin 170 is applied on one of the circuit board mounting surface 140 and the connector facing surface 130, the synthetic resin 170 may be simultaneously applied on another one of the circuit board mounting surface 140 and the connector facing surface 130 through the first resin hole 133. Here, the second resin hole 165 facilitates application of the synthetic resin 170 from one of the above two surfaces into another surface. Here, by disposing a blocking member on a wall of the other surface, it is possible to prevent the synthetic resin 170 from externally leaking over the wall of the other surface.

FIG. 8 is a cross-sectional view in a state in which the synthetic resin 170 is applied. The sealing member 150, the circuit board 160, the terminal 166, and the board connecting portion 186 may be stably fixed by the synthetic resin 170. Also, the synthetic resin 170 is prevented from being injected into the connector connecting portion 131 by the sealing member 150.

One end of the terminal 166 may be positioned to be lower than an outer wall end or top of the connector connecting portion 131. Another end of the terminal 166 may be positioned within the synthetic resin 170.

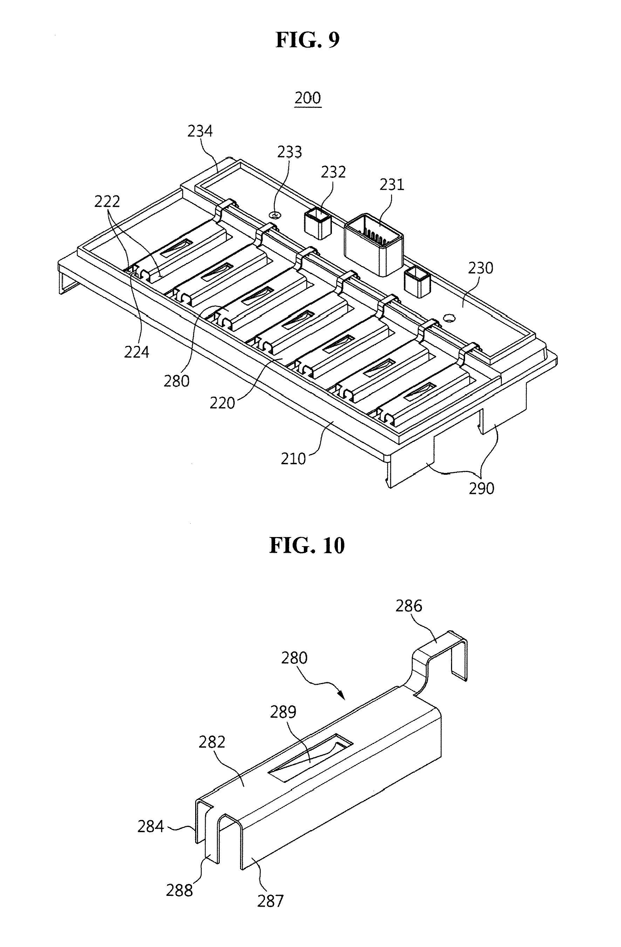

FIG. 9 is a perspective view of a battery cell connecting board 200 according to another embodiment of the present invention, and FIG. 10 is a perspective view of a bus bar 280 according to another embodiment of the present invention. Hereinafter, a description repeating the description made above with reference to FIGS. 1 through 8 will be omitted.

Referring to FIGS. 9 and 10, the battery cell connecting board 200 may include a housing 210 and the bus bar 280.

The housing 210 may include a bus bar mounting surface 220, a connector facing surface 230, a circuit board mounting surface (not shown), and a battery coupling portion 290.

A cell lead inserting hole 222 and a curved portion inserting hole 224 may be formed on the bus bar mounting surface 220.

First and second connecting portions 231 and 232, a resin hole 233, and a wall 234 may be formed on the connector facing surface 230.

The bus bar 280 may include a bus bar body 282 fixed to the housing 210, a board connecting portion 286 connected to a circuit board (not shown), first, second, and third curved portions 284, 287, and 288, and a stopper 289.

The cell lead 12 may be curved on the bus bar body 282 and contact therewith. The bus bar body 282 may be understood as a cell lead connecting portion to be connected to the cell lead 12. For a firm electrical connection between the bus bar body 282 and the cell lead 12, the bus bar body 282 and the cell lead 12 may be welded in a state in which the cell lead 12 is in contact with the bus bar body 282. For example, laser welding or ultrasonic welding may be used.

Each of the first, second, and third curved portions 284, 287, and 288 may be extended from one side of the bus bar body 282. The first, second, and third curved portions 284, 287, and 288 may include the first curved portion 284 and the second curved portion 287 configured to be inserted into the cell lead inserting holes 222, and the third curved portion 288 configured to be inserted into the curved portion inserting hole 224.

A horizontal movement of the bus bar 280 may be prevented by the first curved portion 284 and the second curved portion 287.

A forward and backward movement of the bus bar 280 may be prevented by the board connecting portion 286 and the third curved portion 288.

The stopper 289 may be formed by cutting and then curving one side of the bus bar body 282. The stopper 289 may be formed, for example, within the bus bar body 282.

A stopping hole (not shown) into which the stopper 289 is fixably inserted may be formed on the bus bar mounting surface 220 to correspond to the stopper 289. A vertical movement of the bus bar 280 may be prevented by the stopper 289.

Also, according to the above structure, the bus bar 280 may be fixably assembled to the bus bar mounting surface 220 using a forceful insertion method without using a separate coupling member or welding process.

According to embodiments of the present invention, it is possible to reduce the number of parts and an amount of time used for a manufacturing process by integrally forming a connector connecting portion and a housing. Also, it is possible to effectively fix a circuit board to the housing. Also, it is possible to achieve a waterproof and dustproof structure using synthetic resin. Also, it is possible to prevent resin from filling in an undesired place during a hot-melting process.

A number of examples have been described above. Nevertheless, it should be understood that various modifications may be made. For example, suitable results may be achieved if the described techniques are performed in a different order and/or if components in a described system, architecture, device, or circuit are combined in a different manner and/or replaced or supplemented by other components or their equivalents. Accordingly, other implementations are within the scope of the following claims.

## Claims

1. A battery cell connecting board (100) comprising
a bus bar (180); and
a housing (110) comprising a bus bar mounting surface (120) on which the bus bar (180) is mounted, a circuit board mounting surface (140) on which a circuit board (160) electrically connected to the bus bar (180) is mounted, and a connector facing surface (130) from which protrudes a connector connecting portion (131) for accommodating a terminal (166) connected to the circuit board (160),
wherein the connector connecting portion (131) and the connector facing surface (130) are integrally formed.

2. The battery cell connecting board of claim 1, wherein the circuit board mounting surface (140) is provided on a surface opposite to the connector facing face (130), and
the battery cell connecting board (100) further comprises:
a synthetic resin (170) applied to at least one of the circuit board mounting surface (140) and the connector facing face (130).

3. The battery cell connecting board of claim 2, wherein the housing (110) further comprises a resin hole (133) which passes through the connector facing surface (130) and the circuit board mounting surface (140), and which is arranged to permit the synthetic resin (170) to pass from one of the circuit board mounting surface (140) and the connector facing surface (130) to the other of the circuit board mounting surface (140) and the connector facing surface (130).

4. The battery cell connecting board of claim 3, wherein one end of the terminal (166) is positioned to be lower than a height of the protruded connector connecting portion (131), and another end of the terminal (166) is positioned within a synthetic resin layer formed by the application of the synthetic resin (170).

5. The battery cell connecting board of claim 3 or 4, wherein a wall (145, 134) protruded along the periphery of a corresponding surface to prevent a leakage of the synthetic resin (170) is formed on at least one of the circuit board mounting surface (140) and the connector facing surface (130).

6. The battery cell connecting board of any one of claims 2 to 5, wherein the terminal (166) is in a terminal inserting hole (141) which passes through the circuit board mounting surface (140) and the connector facing surface (130).

7. The battery cell connecting board of any preceding claim, further comprising:
a sealing member (150) disposed between the circuit board (160) and the circuit board mounting surface (140).

8. The battery cell connecting board of claim 6, further comprising:
a sealing member (150) disposed between the circuit board (160) and the circuit board mounting surface (140) to seal a space between the terminal inserting hole (141) and the terminal (166).

9. The battery cell connecting board of claim 8, wherein the bus bar (180) comprises:
a bus bar body (182) configured to be mounted on the bus bar mounting face (120);
a cell lead connecting portion (184) extended from one side of the bus bar body (182) to be connected to a cell lead (12) of an external battery (10); and
a board connecting portion (186) extended from another side of the bus bar body (182) to be connected to the circuit board (160), and
the board connecting portion (186) is connected to the circuit board (160) through a board connecting portion inserting hole (144) formed to pass through the connector facing surface (130) and the circuit board mounting surface (140), and
the synthetic resin (170) is applied in a state in which the board connecting portion (186), the sealing member (150), and the circuit board (160) are mounted on the circuit board mounting surface (140).

10. The battery cell connecting board of any one of claims 1 to 8, wherein the bus bar (180) comprises:
a bus bar body (182) configured to be mounted on the bus bar mounting face (120);
a cell lead connecting portion (184) extended from one side of the bus bar body (182) to be connected to a cell lead (12) of an external battery (10); and
a board connecting portion (186) extended from another side of the bus bar body (182) to be connected to the circuit board (160).

11. The battery cell connecting board of any one of claims 1 to 8, wherein the bus bar (280) comprises:
a bus bar body (282) configured to be mounted on the bus bar mounting surface (220);
a first portion (284) and a second portion (287) extending from opposite sides of the bus bar body (282), respectively, and inserted into cell lead inserting holes (222) formed on the bus bar mounting surface (220), respectively, to prevent a movement of the bus bar (280) in a first direction;
a third portion (288) extending from the bus bar body (282) in a direction different from directions in which the first portion (284) and the second portion (287) extend, and inserted into a third portion inserting hole (224) formed on the bus bar mounting surface (220) to prevent a movement of the bus bar (280) in a second direction perpendicular to the first direction; and
a board connecting portion (286) extended from the bus bar body (282) in a direction opposite to the direction of the third portion (288) and connected to the circuit board.

12. The battery cell connecting board of claim 11, wherein the bus bar (280) further comprises:
a stopper (289) formed by cutting and then curving one side of the bus bar body (282) and fixably inserted into a stoppage hole formed on the bus bar mounting surface (220).

13. The battery cell connecting board of any preceding claim, wherein a location guide portion (142) configured to guide a mounting location of the circuit board (160) and a fixing portion (143) configured to fix the circuit board (160) are formed on the circuit board mounting surface (140), and
a location guide hole (162) corresponding to the location guide portion (142) and a fixing hole (163) corresponding to the fixing portion (143) are formed on the circuit board (160).

14. The battery cell connecting board of claim 13, wherein at least a portion of a wall of the circuit board (160) matches a shape of a wall (145) protruded along the periphery of the circuit board mounting surface (140).

15. A method of manufacturing a battery cell connecting board (100) comprising the steps of:
providing the battery cell connecting board (100) with a housing (110) comprising: a bus bar mounting surface (120), a connector facing surface (130), a circuit board mounting surface (140), and a terminal (166) in a terminal inserting hole (141) which passes through the circuit board mounting surface (140) and the connector facing surface (130);
sealing a space between the terminal inserting hole (141) and the terminal (166) with a sealing member (150);
mounting a circuit board (160) on the circuit board mounting surface (140) wherein the sealing member (150) is disposed between the circuit board (160) and the circuit board mounting surface (140);
mounting a bus bar (180) on the bus bar mounting surface (120) and electrically connecting the circuit board (160) to the bus bar (180) with a board connecting portion (186) of the bus bar (180); and
applying a synthetic resin (170) to at least one of the circuit board mounting surface (140) and the connector facing face (130) in a state in which the board connecting portion (186), the sealing member (150), and the circuit board (160) are mounted on the circuit board mounting surface (140).
